Europäisches Patentamt

European Patent Office

Office européen des brevets

(11) Publication number: **0 241 782**
**B1**

## EUROPEAN PATENT SPECIFICATION

(45) Date of publication of patent specification: **04.07.90**

(21) Application number: **87104486.3**

(22) Date of filing: **26.03.87**

(51) Int. Cl.⁵: **G 01 P 3/56,** G 06 F 13/12

(54) Method and device for speed difference measurement in strip casting.

(30) Priority: **03.04.86 SE 8601491**

(43) Date of publication of application:
**21.10.87 Bulletin 87/43**

(45) Publication of the grant of the patent:
**04.07.90 Bulletin 90/27**

(84) Designated Contracting States:
**DE FR GB IT SE**

(56) References cited:
**DE-A-2 121 414**

(73) Proprietor: **ASEA AB**
**S-721 83 Västeras (SE)**

(72) Inventor: **Danielsson, Dag**
**Oxbacksgatan 7**
**S-724 61 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a method for speed difference measurement in strip casting according to the precharacterising part of Claim 1. The invention also refers to a device for carrying out the method.

By strip casting is meant the production of a cast strip or sheet by pressing a melt between an endless travelling belt and a casting drum, which belt, via the solidifying melt, makes contact with part of the periphery of the casting drum rotating along with the belt. Said part of the periphery represents the casting region. This casting region is continuously moved relative to an around the periphery of the drum during the casting process.

Melt is fed continuously into the V-shaped cleft formed between the casting drum and the travelling belt tangentially entering the casting region. The belt leaves the casting drum tangentially at the end of the casting region and supports the cast strip.

The thickness of the cast strip is determined by several factors, the most important being the following:

—The height of the melt in the V-shaped cleft
—The composition or alloying of the melt
—The temperature of the melt
—The speed of the travelling belt and the peripheral speed of the casting drum
—The prestress of the travelling belt
—The elasticity of the travelling belt
—The kind of cooling of the casting drum and the travelling belt etc.

The quality characteristics of the cast strip are also largely dependent on the above-mentioned factors. In addition, it has proved that the quality of the cast strip is to a very large extent dependent on whether the peripheral speed of the casting drum and the speed of the belt are equal. There must be no slipping between the strip to be cast and the casting drum and between the strip and the travelling belt, respectively. If the respective speeds are different, the cast strip during the casting and solidification process will be subjected to internal stresses between the layer which makes contact with the drum and the layer which makes contact with the belt. The direction of this stress is dependent upon which speed is greater, the speed of the belt or the peripheral speed of the drum.

The above-mentioned internal stresses will lead to the formation of cracks and to brittleness in the as-cast strip, which makes the strip unsuitable for further processing.

Several different principles for driving the travelling belt and the casting drum have been tested. A method involving a fixed gear change between a drive means for the belt and the drum has proved to function very badly, especially if cast strips of different alloys and thickness are to be produced.

Different embodiments of the "master-slave" principle, in which, for example, the drive means for the travelling belt has been selected for determining the casting speed and in which the drive means of the casting drum has been designed to follow the main drive in the best possible way, have also been tested and have given rise to problems.

The invention aims at developing a method and device for speed difference measurement in a strip casting process which makes possible a highly accurate measuring of the relative angular velocity between the casting drum and that part of the travelling belt which makes contact with the strip to be cast.

To achieve this aim the invention provides a method according to Claim 1.

Further developments of the invention are characterized by the features of the dependent Claims 2 and 3.

A device for carrying out the method according to the invention is characterized by the features of Claim 4.

Further developments of this device are characterized by the features of the dependent Claims 5 and 6.

The invention enables to detect and measure a possible speed difference between the peripheral speed of the casting drum and the speed of the travelling belt. The measuring values can hence be employed for regulating purposes, for example for obtaining an equality of speeds.

The invention comprises the use of the travelling belt which, on one edge on its side facing the casting drum, is provided with a raster with a fixed width in the direction of travel of the belt. Around the corresponding side edge of the casting drum, and preferably evenly distributed around the periphery, there are arranged a number of measuring zones having the same widths as the rater on the travelling belt. Each measuring zone consists of or comprises one transducer mounted close to the periphery of the casting drum and directed towards the travelling belt. Each transducer consists of a plurality of optical conductors, radially opening out into the periphery of the casting drum, and a corresponding number of photocells.

A peripheral measuring region with an extension equal to a fixed multiple of the width of the measuring zone is defined, for example as that part of the periphery of the casting drum which is covered by the travelling belt, that is, the casting region. When, during the casting operation, a measuring zone or a transducer has entered the measuring region, the number of activated photocells, and whether the first or the last photocell in the direction of movement is activated, are read by means of the raster on the belt. Then when the same transducer arrives at the end of the measuring region, a new reading is made as to how many photocells are activated via the raster on the belt. A change of the number of activated photocells, increased or reduced, indicates that there is a relative speed between the belt and the periphery of the casting drum. The direction of the relative speed is determined by whether the number of active photocells has increased or reduced and whether the first or the last photocell is activated, and by an additional number of boundary conditions where are to be described below. The information obtained can then be utilized for regulating the respective drive means so that a practical, acceptable speed equality is attained.

The invention will now be described in greater detail with reference to the accompanying drawings showing—by way of example—in

Figure 1 a casting drum and part of an endless travelling belt, a melt and a casting gutter,

Figure 2 a measuring zone with photocells connected to optical conductors,

Figures 3 and 4 a measuring zone and a part of the travelling belt travelling opposite of this zone,

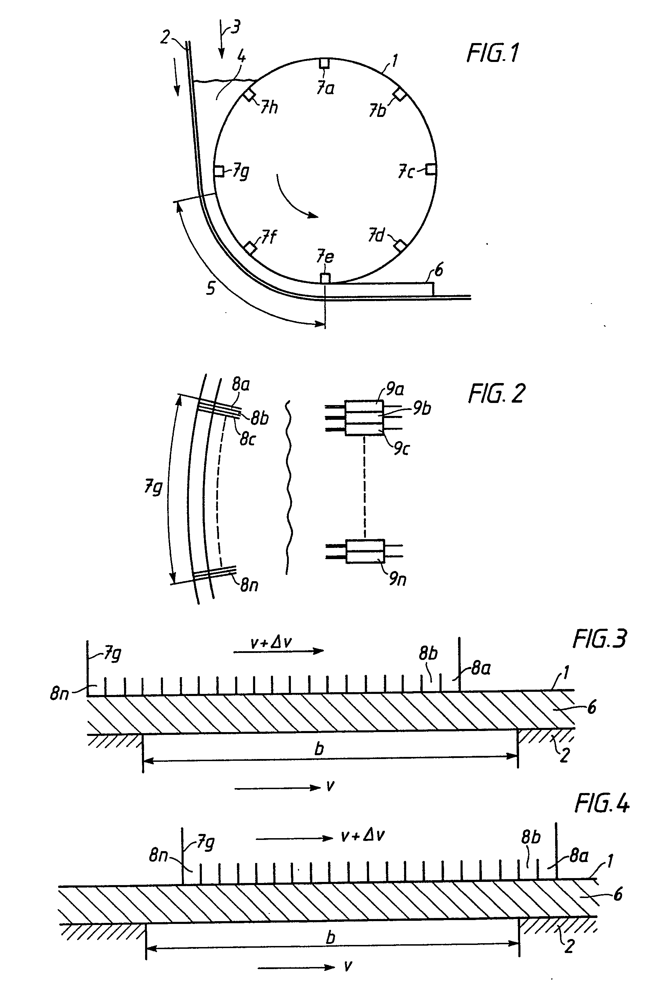

Figure 1 shows schematically a device for strip casting. Between a casting drum 1 and an endless travelling belt 2 a melt 4 is continuously supplied at 3, solidifies in the casting region 5, and is cast into a strip 6.

On one axial side of the casting drum 1 a number of measuring zones 7a—7h are evenly distributed along the periphery of the casting drum, each measuring zone comprising a transducer.

On that side of the travelling belt 2 facing the casting drum 1 and on the edge of the belt positioned opposite of the edge of the casting drum 1 on which the measuring zones and the transducers are located, the belt 2 is provided with a raster pattern having alternately darker and lighter stripes. The extension of the raster strips in the travelling direction of the belt 2 is equal to the peripheral extension or width of the measuring zones.

As will be clear from the above description of the measuring principle, each transducer consists of a number of optical conductors and a corresponding number of photocells and covers the entire extension of the measuring zone. From a purely practical point of view, the transducer can be formed according to Figure 2. To obtain the desired resolution capacity, a relatively large number of photocells must be included in the transducer of each measuring zone. A good resolution capacity also requires that the peripheral extension of the measuring zones must be restricted. In practice this means that, from the view point of space, the photocells cannot be located directly at the periphery of the casting drum 1. To transmit the information about the position of the raster stripes in relation to the measuring zones, optical conductors are therefore used which open out into the periphery of the casting drum 1 in the measuring zone, thus obtaining a considerably higher packing density of the light-sensitive elements. As will be clear from Figure 2, showing the transducer for measuring zone 7g according to Figure 1, a great number of optical conductors 8a ... 8n are placed in each measuring zone. Via these conductors, current signals are transmitted to the photocells 9a ... 9n, located inside the casting drum 1, for further signal processing.

In one embodiment the belt 2 may be rastered with alternatively light and dark stripes with an extension in the travelling direction of the belt 2 of, for example, 1 mm. According to what has been described, the peripheral extension of each measuring zone shall have the same width, that is, also 1 mm. Each measuring zone may, for example, be covered by 20 optical conductors, each one then having an extension of 0.05 mm in the peripheral direction.

When a transducer, for example the transducer in measuring zone 7g, has just entered the measuring region, which may be the casting region 5 according to Figure 1, an overlap configuration between the measuring zone and the rastered belt 2 may have an appearance as illustrated in Figure 3. In the example shown, the first 17 photocells 9a—9n indicate, via the optical conductors, an overlap of 17/20 of 1 mm.

When the same transducer has arrived at the end of the measuring region, the overlap configuration between the same transducer and the same raster stripe may have an appearance according to Figure 4. From this it is clear that the peripheral speed or angular speed of the casting drum 1 is somewhat greater than the corresponding speed of the belt 2, since the photocells of the transducer, via the optical conductors, will now determine that only the last 18 photocells are activated. Therefore, in total terms, a displacement amount to (3+2)/20 of the measuring zone, or in this case 0.25 mm, has taken place within the measuring region.

From a general point ov view, it is simple to prove that when

b=the extension of the measuring zone in a peripheral direction,

n=the number of photocells within the measuring zone,

dn=a change in the number of activated photocells within the measuring region for the same measuring zone,

m=the peripheral extension of the measuring region, and

v=the nominal belt speed

then the speed difference between the belt and the periphery of the casting drum is

$$dv = \frac{v \cdot dn \cdot b}{m \cdot n}$$

By dividing this expression by v and multiplying by 100, the speed difference, expressed as a percentage, is obtained, that is

$$p = \frac{dv}{v} = \frac{dn \cdot b}{m \cdot n} \cdot 100\%$$

A simple and classical device for determining which of the speeds—the speed of the belt or the peripheral speed of the drum—is the greater may consist of a tachometer mounted on a deflector roll for the travelling belt and a tachometer mounted on a shaft of the casting drum, possibly a tachometer mounted via a friction or other coupling connected to the periphery of the drum. By adjusting the output voltage of the tachometers so that they deliver the same signal when the two speeds are equal, and then connecting the signals in opposition, a polarized signal is obtained which indicates which of the low speeds is the greater. Because of the relatively low speeds which may occur in this connection, the accuracy in determination will be exceedingly limited.

To be able better to determine whether the peripheral speed of the casting drum 1 is higher or lower than the speed of the belt 2, it is possible, as stated in the above description of the principle of the invention, to find out which of the first or the last photocell is activated. From Figure 3 and 4 it will be clear that the first photocell is activated via an optical conductor 8a when the measuring zone enters the measuring region and that the last photocell is activated via an optical conductor 8n when the measuring zone leaves the measuring region. As will be clear from the above, this indicates that the peripheral speed of the casting drum 1 is higher than the speed of the belt 2. In a corresponding way it can be determined whether the peripheral speed of the casting drum 1 is lower than the speed of the belt 2.

From a general point of view, there are a great number of different border conditions that have to be evaluated to be able to determine whether the speed of the belt 2 or the peripheral speed of the drum 1 is the greater. The following parameters, which describe how a transducer is positioned in relation to one and the same white raster stripe upon entering and leaving the measuring region, respectively, are made the basis of the decision:

fi0f indicates that no photocell is activated when entering the measuring region; the first photocells of the transducer in the direction of movement is positioned ahead of the first white raster stripe in the measuring region;

fi1 indicates that tat least the first photocell is activated upon entering the measuring region;

fis indicates that all the photocells are activated when entering the measuring region;

fin indicates that at least the last photocell is activated upon entering the measuring region;

fi0e indicates that no photocell is activated when leaving the measuring region; the last photocell of the transducer is positioned after the first white raster stripe in the measuring region;

fu0f indicates that no photocell is activated when leaving the measuring region; the first photocell of the transducer is positioned ahead of the current white raster stripe;

fu1 indicates that at least the first photocell is activated when leaving the measuring region;

fus indicates that all the photocells are activated when leaving the measuring region;

fun indicates that at least the last photocell is activated when leaving the measuring region;

fu0e indicates that no photocell is activated when leaving the measuring region; the last photocell of the transducer is positioned after the current white raster stripe;

$ni$=the number of activated photocells upon entering the measuring region;

$nu$=the number of activated photocells when leaving the measuring region;

$$dn=ni-nu;$$
$$dnp=dn \text{ when } ni>nu;$$
$$dnm=dn \text{ when } ni<nu.$$

When fi0f and fu0f and when fi0e and fu0e occur, dn is valid for the immediately preceding raster stripe upon entering the measuring region and for the immediately succeeding raster stripe when leaving the measuring region, respectively.

The peripheral speed of the drum 1 is greater than the speed of the belt 2, that is, $v_{drum}>v_{belt}$ when the following conditions, expressed in Boolean algebra, exist:

$$v_{drum}>v_{belt}:$$

$$fi0f(fu1+fus+fun+fu0e)+$$
$$fil(fu1 \cdot dnm+fus+fun+fu0e)+$$
$$fis(fun+fu0e)+$$
$$fin(fun \cdot dnp+fu0e)+$$
$$fi0e \cdot fu0e \cdot dnm.$$

In all other cases, apart from the case where dn=0, the speed of the belt 2 is greater than the peripheral speed of the drum 1. This can also be explicitly expressed as follows:

$$v_{belt}>v_{drum}:$$

$$fi0f \cdot fu0f \cdot dnm+$$
$$fil(fu0f+fu1 \cdot dnp)+$$
$$fis(fu0f+fu1)+$$
$$fin(fu0f+fu1+fus+fun \cdot dnm)+$$
$$fi0e(fu0f+fu1+fus+fun+fu0e \cdot dnp).$$

The execution of these logical decisions are trivial operations, per se, which may be carried out in many different ways.

All the signals obtained via the photocells of the transducers cannot, of course, be brought out of the casting drum 1 for further signal processing. Above all the plurality of signals to be processed and also the simple calculations and logical decisions to be made presuppose the mounting of a microprocessor inside the casting drum 1. In addition to the need for the microprocessor to be programmable for the constants b, m and n, which, in principle, are fixed, it must be capable of being supplied with current signal information about the belt speed, and possibly the peripheral speed of the casting drum if this is desired as comparison speed. Also the microprocessor has to be programmed, based on signals from the photocells, to produce dn and calculate dv, the value of which must be capable of being supplied to the control equipment for the drive means.

## Claims

1. Method for speed difference measurement in strip casting between the speed of an endless travelling belt (2) and the peripheral speed of a casting drum (1), which travelling belt, via a solidifying melt (4), makes contact with part of the periphery, the casting region (5), of the casting drum (1), characterized in that on one axial side of and around the periphery of the casting drum a number of measuring zones (7a to 7h) are arranged with a given extension b in a peripheral direction, each measuring zone being provided with a transducer comprising a number n of photocells (9) which are each connected to an optical conductor (8a to 8n) opening out radially towards the periphery of the casting drum, that on that side of the travelling belt facing the casting drum and the measuring zones a raster of alternately darker and lighter stripes is provided with the stripes having a given extension b in the direction of travel of the belt and the same width as that of the measuring zones, and that on the basis of the difference dn between the number of photocells, activated by means of the raster, when entering a measuring region m along the periphery of the casting drum, and the corresponding number of activated photocells, when leaving said measuring region for the same transducer and raster stripe, the speed difference p, expressed as a percentage, between the speed of the travelling belt and the peripheral speed of the casting drum can be expressed as

$$p = \frac{dn \cdot b}{m \cdot n} \cdot 100\%$$

2. Method according to Claim 1, characterized in that if the speed of the belt or the peripheral speed of the casting drum is designated v, the real speed difference between said speeds can be expressed as

$$dv = \frac{v \cdot dn \cdot b}{m \cdot n}$$

3. Method according to Claim 1 in which fi0f indicates that no photocell is activated when entering the measuring region; the first photocell of the transducer in the direction of movement is positioned ahead of the first white raster stripe in the measuring region;
fi1 indicates that at least the first photocell is activated upon entering the measuring region;
fis indicates that all the photocells are activated when entering the measuring region;
fin indicates that at least the photocell is activated upon entering the measuring region;
fi0e indicates that no photocell is activated when leaving the measuring region; the last photocell of the transducer is positioned after the first white raster stripe in the measuring region;
fu0f indicates that no photocell is activated when leaving the measuring region; the first photocell of the transducer is positioned ahead of the current white raster stripe;
fu1 indicates that at least the first photocell is activated when leaving the measuring region;
fus indicates that all the photocells are activated when leaving the measuring region;
fun indicates that at least the photocell is activated when leaving the measuring region;
fu0e indicates that no photocell is activated when leaving the measuring region; the last photocell of the transducer is positioned after the current white raster stripe;
dnp indicates that the number of activated photocells when entering the measuring region is greater than the number of activated photocells when leaving the measuring region;
dnm indicates that the number of activated photocells when leaving the measuring region is greater than the number of activated photocells when entering the measuring region; characterized in
that the peripheral speed of the casting drum is stated to be greater than the speed of the travelling belt, that is, $v_{drum} < v_{belt}$, when the following conditions, expressed in Boolean algebra, exist:

fi0f(fu1+fus+fun+fu0e)+
fil(fu1 · dnm+fus+fun+fu0e)+
fis(fun+fu0e)+
fin(fun · dnp+fu0e)+
fi0e · fu0e · dnm,

and that the peripheral speed of the casting drum is stated to be less than the speed of the travelling belt, that is, $v_{belt} > v_{drum}$, when the following conditions, expressed in Boolean algebra, exist:

fi0f · fu0f · dnm+
fil(fu0f+fu1 · dnp)+
fis(fu0f+fu1)+
fin(fu0f+ful+fus+fun · dnm)+
fi0e(fu0f+fu1+fus+fun+fu0e · dnp).

4. Device for carrying out the method according to Claim 1, characterized in that on one axial side of and around the periphery of a casting drum a number of measuring zones (7a to 7h) are arranged with a given extension b in a peripheral direction, each measuring zone being provided with a transducer comprising a number n of photocells (9) which are each connected to an optical conductor (8a to 8b) opening out radially towards the periphery of the casting drum, that on that side of the travelling belt facing the casting drum and the measuring zones a raster of alternately darker and lighter stripes is provided with the stripes having a given extension b in the direction of travel of the belt and the same width as that of the measuring zones, and that a part m of the casting region is arranged to be a measuring region for which, by means of the raster, the difference dn between the number of activated photocells when entering the measuring region and the corresponding number of activated photocells when leaving the measuring region for the same transducer and the same raster stripe is adapted to be calculated, whereby the speed difference p, expressed as a percentage, between the speed of the travelling belt and the peripheral speed of the casting drum is adapted to be calculated as

$$p = \frac{dn \cdot b}{m \cdot n} \cdot 100\%$$

5. Device according to Claim 4, characterized in that if the speed of the belt or the peripheral speed of the casting drum is designated v, the real speed difference between said speeds can be calculated by

$$dv = \frac{v \cdot dn \cdot b}{m \cdot n}$$

6. Device according to Claim 4 comprising logic AND/OR-elements for executing the Boolean inequalities with the meansings given in claim 3:

$$v_{drum} < v_{belt} \text{ when}$$

fi0f(fu1+fus+fun+fu0e)+
fil(fu1 · dnm+fus+fun+fu0e)+
fis(fun+fu0e)+
fin(fun · dnp+fu0e)+
fi0e · fu0e · dnm

and

$$v_{belt} > v_{drum} \text{ when}$$

fi0f · fu0f · dnm+
fil(fu0f+fu1 · dnp)+
fis(fu0f+fu1)+
fin(fu0f+fu1+fus+fun · dnm)+
fi0e(fu0f+fu1+fus+fun+fu0e · dnp).

**Patentansprüche**

1. Verfahren zur Messung einer Geschwindigkeitsdifferenz beim Bandgießen zwischen der Geschwindigkeit eines endlosen umlaufenden Bandes (2) und der Umfangsgeschwindigkeit einer Gießtrommel (1), wobei das umlaufende Band über eine erstarrende Schmelze (4) mit einem Teil des Umfanges der Gießtrommel (1), dem Gießbereich (5), in Kontakt steht dadurch gekennzeichnet, daß an einer axialen Seiten der Gießtrommel eine Anzahl von Meßzonen (7a bis 7b) mit einer bestimmten Länge b in Umfangsrichtung verteilt angeordnet ist, wobei jede Meßzone mit einem Geber ausgerüstet ist, der eine Anzahl n Photozellen (9) enthält, von denen jede an einen optischen Leiter (8a bis 8n) angeschlossen ist, welcher radial nach außen zum Umfang der Gießtrommel hin endet, daß an derjenigen Seite des umlaufenden Bandes, welche der Gießtrommel und den Meßzonen zugewandt ist, ein Raster aus abwechselnd dunklen und hellen Streifen angeordnet ist, wobei die Streifen eine bestimmte Länge b in der Laufrichtung des Bandes und die gleiche Breite wie die Meßzonen haben, und daß der Grundlage der Differenz dn zwischen der Anzahl von Photosellen, die durch das Raster aktiviert wird, wenn dieses in einen Meßbereich m längs des Umfanges der Gießtrommel eintrit, und die entsprechende Anzahl aktivierter Photozellen beim Verlassen der Meßzone für den gleichen Geber und Rasterstreifen die Geschwindigkeitsdifferenz p, ausgedrückt in Prozent, zwischen der Geschwindigkeit des umlaufenden Bandes und der Umfangsgeschwindigkeit der Gießtrommel durch den Ausdruck

$$p = \frac{dn \cdot b}{m \cdot n} \cdot 100\%$$

beschrieben wird.

2. Verfahren nach Anspruch 1, dadurch gekennzeichnet, daß, wenn die Geschwindigkeit des Bandes oder die Umfangsgeschwindigkeit der Gießtrommel mit v bezeichnet wird, die tatsächliche Geschwindigkeitsdifferenz zwischen den genannten Geschwindigkeiten durch

$$dv = \frac{v \cdot dn \cdot b}{m \cdot n}$$

beschrieben wird.

3. Verfahren nach Anspruch 1, wobei
fi0f angibt, daß keine Photozelle aktiviert wird beim Eintritt in die Meßzone; die erste Photozelle des Gebers in Bewegungsrichtung vor dem ersten weißen Rasterstreifen der Meßzone liegt;
fi1 angibt, daß zumindest die erste Photozelle beim Eintritt in die Meßzone aktiviert wird;
fis angibt, daß alle Photozellen beim Eintritt in die Meßzone aktiviert werden;
fin angibt, daß zumindest die letzte Photozelle beim Eintritt in die Meßzone aktiviert wird;
fi0e angibt, daß keine Photozelle beim Verlassen der Meßzone aktiviert wird; die letzte Photozelle des Gebers hinter dem ersten weißen Rasterstreifen der Meßzone liegt;
fu0f angibt, daß keine Photozelle aktiviert wird beim Verlassen der Meßzone; die erste Photozelle des Gebers vor dem augenblicklichen weißen Rasterstreifen liegt;
fu1 angibt, daß zumindest die erste Photozelle beim Verlassen der Meßzone aktiviert wird;
fus angibt, daß alle Photozellen beim Verlassen der Meßzone aktiviert werden;
fun angibt, daß zumindest die letzte Photozelle beim Verlassen der Meßzone aktiviert wird;
fu0e angibt, daß keine Photozelle beim Verlassen der Meßzone aktiviert wird; die letzte Photozelle des Gebers hinter dem laufenden weißen Rasterstreifen liegt;
dnp angibt, daß die Anzahl der aktivierten Photozellen beim Eintritt in die Meßzone größer als die Anzahl der aktivierten Photozellen beim Verlassen der Meßzone ist;

dnm angibt, daß die Anzahl der aktivierten Photozellen beim Verlassen der Meßzone größer als die Anzahl der aktivierten Photozellen beim Eintritt in die Meßzone ist; dadurch gekennzeichnet,

daß die Umfangsgeschwindigkeit der Gießtrommel als größer ald die Geschwindigkeit des umlaufenden Bandes angegeben wird, d.h. $v_{drum} > v_{belt}$, wenn die folgenden Bedingungen, ausgedrückt in Bool'scher Algebra, bestehen:

    fi0f(fu1+fus+fun+fu0e)+
    fil(fu1 · dnm+fus+fun+fu0e)+
    fis(fun+fu0e)+
    fin(fun · dnp+fu0e)+
    fi0e · fu0e · dnm,

und daß die Umfangsgeschwindigkeit der Gießtrommel als kleiner als die Geschwindigkeit des umlaufenden Bandes angegeben wird, d.h., $v_{belt} > v_{drum}$, wenn die folgenden Bedingungen,, ausgedrückt in Bool'scher Algebra, bestehen:

    fi0f · fu0f · dnm+
    fil(fu0f+fu1 · dnp)+
    fis(fu0f+fu1)+
    fin(fu0f+fu1+fus+fun · dnm)+
    fi0e(fu0f+fu1+fus+fun+fu0e · dnp).

4. Anordnung zur Ausführung des Verfahrens nach Anspruch 1, dadurch gekennzeichnet, daß an einer axialen Seite der Gießtrommel eine Anzahl von Meßzonen (7a bis 7b) mit einer bestimmten Läng b in Umfangsrichtung verteilt angeordnet ist, wobei jede Meßzone mit einem Geber ausgerüstet ist, der eine Anzahl n Photozellen (9) enthält, von denen jede an einen optischen Leiter (8a bis 8n) angeschlossen ist, welcher radial nach außen zum Umfang der Gießtrommel hin endet, daß an derjenigen Seite des umlaufenden Bandes, welche der Gießtrommel und den Meßzonen zugewandt ist, ein Raster aus abwechselnd dunklen und hellen Streifen angeordnet ist, wobei die Streifen eine bestimmte Länge b in der Laufrichtung des Bandes und die gleiche Breite wie die Meßzonen haben, und daß ein Teil n des Gießbereiches als Meßbereich vorgesehen ist, in welchem mittels eines Rasters die Differenz dn zwischen der Anzahl aktivierter Photozellen beim Eintritt in den Meßbereich und der entsprechenden Anzahl aktivierter Photozellen beim Verlassen des Meßbereiches für denselben Geber und denselben Rasterstreifen berechnet werden kann, wobei die Geschwindigkeitsdifferenz p, ausgedrückt in Prozent, zwischen der Geschwindigkeit des umlaufenden Bandes und der Umfangsgeschwindigkeit der Gießtrommel entsprechende dem Ausdruck

$$p = \frac{dn \cdot b}{m \cdot n} \cdot 100\%$$

berechnet werden kann.

5. Anordnung nach Anspruch 4, dadurch gekennzeichnet, daß, wenn die Geschwindigkeit des Bandes oder die Umfangsgeschwindigkeit der Gießtrommel mit v bezeichnet wird, die tatsächliche Differenzgeschwindigkeit zwischen den genannten beiden Geschwindigkeiten nach der Formel

$$dv = \frac{v \cdot dn \cdot b}{m \cdot n}$$

berechnet werden kann.

6. Anordnung nach Anspruch 4 mit logischen UND/ODER-Elementen zur Berechnung der Bool'schen Ungleichungen mit den in Anspruch 3 gegebenen Definitionen:

$v_{drum} > v_{belt}$, wenn

    fi0f(fu1+fus+fun+fu0e)+
    fil(fu1 · dnm+fus+fun+fu0e)+
    fis(fun+fu0e)+
    fin(fun · dnp+fu0e)+
    fi0e · fu0e · dnm

und

$v_{belt} > v_{drum}$, wenn

    fi0f · fu0f · dnm+
    fil(fu0f+fu1 · dnp)+
    fis(fu0f+fu1)+
    fin(fu0f+fu1+fus+fun · dnm)+
    fi0e(fu0f+fu1+fus+fun+fu0e · dnp).

**Revendications**

1. Procédé de mesure de différence de vitesse dans la coulée en bande, entre la vitesse d'uns courroie sans fin en mouvement (2) et la vitesse périphérique d'un tambour de coulée (1), la courroie en mouvement venant en contact, par l'intermédiaire d'un bain de métal en fusion (4) en cours de solidification, avec une partie de la périphérie du tambour de coulée (1), cette partie constituant la région de coulée (5), caractérisé en ce que sur une côté axial du tambour de coulée, et à la périphérie de celui-ci, sont disposées un certain nombre de zones de mesure (7a à 7h) ayant une étendue donnée b dans une direction périphérique, chaque zone de mesure comportant un transducteur qui comprend un nombre n de cellules photoélectriques (9), chacune d'elles étant connectée à un conducteur optique (8a à 8n) qui débouche radialement vers la périphérie du tambour de coulée, en ce que sur le côte de la courroie en mouvement qui fait face au tambour de coulée et aux zones de mesure, est formé un motif périodique consistant en bandes alternativement sombres et claires, ces bandes ayant une étendue donnée b dans la direction du mouvement de la courroie et ayant la même largeur que les zones de mesure, et en ce que, sur la base de la différence du nombre de cellules photoélectriques qui sont activées au moyen du motif périodique, au moment de l'entrée dans une région de mesure m le long de la périphérie du tambour de coulée, et le nombre correspondant de cellules activées au moment de la sortie de la région de mesure, pour le même transducteur et la même bande du motif périodique, la différence de vitesse p, exprimée en pourcentage, entre la vitesse de la courroie en mouvement et la vitesse périphérique du tambour de coulée, peut s'exprimer de la façon suivante:

$$p = \frac{dn \cdot b}{m \cdot n} \cdot 100\%$$

2. Procédé selon la revendication 1, caractérisé en ce que si on désigne par v la vitesse de la courroie ou la vitesse périphérique du tambour de coulée, la différence de vitesse réelle entre les vitesses précitées peut s'exprimer de la façon suivante:

$$dv = \frac{v \cdot dn \cdot b}{m \cdot n}$$

3. Procédé selon la revendication 1, dans lequel:

fi0f indique qu'aucune cellule photoélectrique n'est activée au moment de l'entrée dans la région de mesure; la première cellule photoélectrique du transducteur dans la direction du mouvement est placée en avant de la première bande blanche du motif périodique dans la région de mesure;

fi1 indique que la première cellule photoélectrique, au moins est activée au moment de l'entrée dans la région de mesure;

fis indique que toutes les cellules photoélectriques sont activées au moment de l'entrée dans la région de mesure;

fin indique que la dernière cellule photoélectrique, au moins, est activée au moment de l'entrée dans la région de mesure;

fi0e indique qu'aucune cellule photoélectrique n'est activée au moment de la sortie de la région de mesure; la dernière cellule photoélectrique du transducteur est placée après la première bande blanche du motif périodique dans la région de mesure;

fu0f indique qu'aucune cellule photoélectrique n'est activée au moment de la sortie de la région de mesure; la première cellule photoélectrique du transducteur est placée en avant de la bande blanche courante du motif périodique;

fu1 indique que la première cellule photoélectrique, au moins, est activée au moment de la sortie de la région de mesure;

fus indique que toutes les cellules photoélectriques sont activées au moment de la sortie de la région de mesure;

fun indique que la dernière cellule photoélectrique, au moins, est activée au moment de la sortie de la région de mesure;

fu0e indique qu'aucune cellule photoélectrique n'est activée au moment de la sortie de la région de mesure; la dernière cellule photoélectrique du transducteur est placée après la bande blanche courant du motif périodique;

dnp indique que le nombre de cellules photoélectrique activées au moment de l'entrée dans la région de mesure est supérieur au nombre de cellules photoélectriques activées au moment de la sortie de la région de mesure;

dnm indique que le nombre de cellules photoélectrique activées au moment de la sortie de la région de mesure est supérieur au nombre de cellules photoélectriques activées au moment de l'entrée dans la région de mesure; caractérisé en ce que

on détermine que la vitesse périphérique du tambour de coulée est supérieure à la vitesse de la courroie en mouvement, c'est-à-dire que $v_{tambour} > v_{vourroie}$, lorsque les conditions suivantes, exprimées en algèbre de Boole, existent:

fi0f(fu1+fus+fun+fu0e)+
fi1(fu1 · dnm+fus+fun+fu0e)+
fis(fun · dnp+fu0e)+
fin(fun · dnp+fu0e)+
fi0e · fu0e · dnm,

en on considère que la vitesse périphérique du tambour de coulée est inférieure à la vitesse de la courroie en mouvement, c'est-à-dire que $v_{courroie} > v_{tambour}$, lorsque les conditions suivantes, exprimées en algèbre de Boole existent:

fi0f · fu0f · dnm+
fi1(fu0f+fu1 · dnp)+
fis(fu0f+fu1)+
fin(fu0f+fu1+fus+fun · dnm)+
fi0e(fu0f+fu1+fus+fun+fu0e · dnp).

4. Dispositif pour mettre en oeuvre le procédé de la revendication 1, caractérisé en ce que sur un côté axial d'un tambour de coulée, et à la périphérie de ce tambour, un certain nombre de zones de mesure (7a à 7h) sont disposées avec une étendue donnée b dans une direction périphérique, chaque zone de mesure comportant un transducteur qui comprend un nombre n de cellules photoélectriques (9), chaque cellule photoélectrique étant connectée à un conducteur optique (8a à 8n) qui débouche radialement à la périphérie du tambour de coulée, en ce que sur le côté de la courroie en mouvement qui fait face au tambour de coulée et aux zones de mesure, est formé un motif périodique de bandes alternativement sombres et claires, ces bandes ayant une étendue donnée b dans la direction de déplacement de la courroie, et la même largeur que les zones de mesure, et en ce qu'une partie m de la région de coulée constitue une région de mesure pour laquelle on calcule, au moyen du motif périodique, la différence dn entre le nombre de cellules photoélectriques activées au moment de l'entrée dans la région de mesure, et le nombre correspondant de cellules photoélectriques activées au moment de la sortie de la région de mesure, pour le même transducteur et la même bande du motif périodique, grâce à quoi on peut calculer la différence de vitesse p, exprimée en pourcentage, entre la vitesse de la courroie en mouvement et la vitesse périphérique du tambour de coulée, conformément à la formule:

$$p = \frac{dn \cdot b}{m \cdot n} \cdot 100\%$$

5. Dispositif selon la revendication 4, caractérisé en ce que si on désigne par v la vitesse de la courrie ou la vitesse périphérique du tambour de coulée, on peut calculer la différence de vitesse réelle entre les vitesse précitées par la relation:

$$dv = \frac{v \cdot dn \cdot b}{m \cdot n}$$

6. Dispositif selon la revendication 4, comprenant des éléments logiques ET/OU pour évaluer les inégalités booléennes suivantes, avec les significations données dans la revendication 3:

$$v_{tambour} > v_{courroie} \text{ lorsque}$$

fi0f(fu1+fus+fun+fu0e)+
fil(fi1 · dnm+fus+fun+fu0e)+
fis(fun+fu0e)+
fin(fun · dnp+fu0e)+
fi0e · fu0e · dnm

et

$$v_{courroie} > v_{tambour} \text{ lorsque}$$

fi0f · fu0f · dnm+
fil(fu0f+fu1 · dnp)+
fis(fu0f+fu1)+
fin(fu0f+fu1+fus+fun · dnm)+
fi0e(fu0f+fu1+fus+fun+fu0e · dnp).

FIG.1

FIG. 2

FIG.3

FIG.4